# EUROPEAN PATENT SPECIFICATION

(11) **EP 2 500 590 B1**
(45) Date of publication and mention of the grant of the patent: **18.06.2014**
(21) Application number: 10829978.5
(22) Date of filing: 11.11.2010
(51) Int. Cl.: F16C 29/02, F03D 1/00, F03D 11/00, F16C 21/00, F16C 29/06, F16C 29/00

(54) **TURNING STRUCTURE AND HORIZONTAL WIND TURBINE USING SAME**
DREHSTRUKTUR UND HORIZONTALE WINDTURBINE DAMIT
STRUCTURE TOURNANTE ET TURBINE ÉOLIENNE HORIZONTALE UTILISANT CETTE DERNIÈRE

(30) Priority: 13.11.2009 JP 2009260009
(43) Date of publication of application: 19.09.2012
(73) Proprietor: THK Co., Ltd., Tokyo 141-8503 (JP)
(72) Inventor: YAMADA, Yukio, Tokyo 141-8503 (JP); YAMASHITA, Shinji, Tokyo 141-8503 (JP)
(74) Representative: Schäfer, Matthias W.
(86) International application number: PCT/JP2010/070084
(87) International publication number: WO 2011/059019

(56) References cited:
- JP-A- 2009 127 647
- JP-B2- 4 077 804

## Description

### TECHNICAL FIELD

The present invention relates to a turning structure and a horizontal-axis wind turbine using the turning structure.

### BACKGROUND ART

For example, a horizontal-axis wind turbine to be used for a wind turbine generator includes a hub rotatably supported on a nacelle that houses an electrical generator, and a plurality of blades radially extending from the hub. The blades are each coupled to the hub via a turning structure so that an angle of mounting to the hub (hereinafter, referred to as "pitch angle") can be changed (Patent Literature 1) . Through such appropriate change of the pitch angle of the blade, it is possible to control power generation efficiency in accordance with wind speed as represented by light or strong wind, to suppress wind pressure at the time of strong wind such as a typhoon, and to prevent overspeed of the horizontal-axis wind turbine itself.

As this type of turning structure, as described in Patent Literature 1 and patent literature 2, there is known a turning bearing including a large number of rolling elements arranged between an inner race and an outer race. Specifically, the turning bearing includes: an outer race having a raceway surface for rolling elements, which is formed along an inner peripheral surface of the outer race; an inner race having a raceway surface, which is opposed to the raceway surface on the outer race side and is formed in an outer peripheral surface of the inner race; and a large number of rolling elements capable of rolling between the outer race and the inner race while carrying loads. As the rolling elements, any of balls and rollers may be used. In a case where the rollers are used instead of the balls, in order to prevent the inner race and the outer race from separating from each other due to the loads, it is necessary to arrange the rollers on a single raceway surface in a crossed roller structure, or to form double-row raceway surfaces and vary the direction of roller inclination between the respective raceway surfaces.

### PRIOR ART DOCUMENT

### Patent Literature

Patent Literature 1: WO 2007/061439
Patent Literature 2: JP 2009 127 647 (THK Co. ltd)

### DISCLOSURE OF THE INVENTION

### PROBLEMS TO BE SOLVED BY THE INVENTION

In recent years, upsizing of the wind turbine generator has been progressed to increase the rated power, and accordingly the diameter of the horizontal-axis wind turbine is also increased. Among those wind turbine generators, there is a wind turbine generator in which the blade as a component of the horizontal-axis wind turbine is up to several tens of meters long. Therefore, the turning bearing for coupling each blade and the hub together tends to increase in diameter as well.

However, a special facility is necessary to produce such a huge turning bearing. Further, large-diameter steel products suitable for the production need to be acquired. As a result, production cost may be increased.

On the other hand, as the loads applied to the turning structure for the blade, there are conceived an axial load applied in an axial direction of the turning structure, a radial load applied in a direction perpendicular to the axial direction, and a moment load. When the horizontal-axis wind turbine rotates, a centrifugal force is applied to each blade, and is applied to the turning structure as the axial load. Further, a force for rotating the hub, which is generated when the blade receives wind, is applied to the turning structure as the moment load. Thus, among the loads applied to the turning structure for the blade, the axial load and the moment load are extremely larger as compared to the radial load, and this tendency becomes more significant as the overall length of the blade becomes larger.

However, in the above-mentioned conventional turning bearing, in its structural aspect, capacities of carrying the radial load and the axial load are substantially equal to each other. Therefore, when the number of rolling elements or the diameter of the rolling elements is increased so that an allowable load to be carried is set to a large value in consideration of the considerable axial or moment load, the capacity of carrying the radial load becomes excessively large, inevitably. That is, there arises a problem in that the excessive carrying capacity causes unnecessary cost increase.

### MEANS FOR SOLVING THE PROBLEMS

The present invention has been made in view of the above-mentioned problem, and it is therefore an object thereof to provide a turning structure, which is capable of reliably carrying a radial load, an axial load, and a moment load applied to the turning structure, and is producible at low cost.

In order to achieve the above-mentioned object, the present invention provides a turning structure, including: a rolling bearing mechanism including: a stationary ring, which is formed of a plurality of arc-like track rails each having a predetermined curvature, and is formed into an endless annular shape; and a plurality of slide blocks, which are mounted to the stationary ring via a large number of rolling elements, and are freely movable along the stationary ring; and a slide bearing mechanism including: a turning table, which is fixed to the plurality of slide blocks of the rolling bearing mechanism, and is formed into an annular shape, the turning table being configured to support an object to be turned; and a bearing member, which is formed into a substantially C-shape in cross section so as to sandwich the turning table from an axial direction of the turning structure, and forms a slide bearing together with the turning table.

### EFFECTS OF THE INVENTION

According to the above-mentioned turning structure of the present invention, the rolling bearing mechanism can reliably carry the radial load applied to the turning structure, and the slide bearing mechanism can reliably carry the axial load and the moment load applied to the turning structure. Therefore, even in a case where the axial load and the moment load are extremely larger as compared to the radial load, there is no need to increase the number of rolling elements or the diameter of the rolling elements unlike the conventional turning structure. Accordingly, unnecessary cost increase does not occur, with the result that the turning structure is producible at low cost.

### BRIEF DESCRIPTION OF THE DRAWINGS

[FIG. 1] A front view illustrating an example of a wind turbine generator, to which a turning structure of the present invention is applied.
[FIG. 2] A sectional view illustrating an example of the turning structure of the present invention.
[FIG. 3] A perspective view illustrating an example of a rolling bearing mechanism as a component of the turning structure.
[FIG. 4] A perspective view illustrating a combination of an arc-like track rail and a slide block as components of the rolling bearing mechanism illustrated in FIG. 3.

### MODE FOR CARRYING THE INVENTION

Hereinafter, a turning structure of the present invention is described in detail with reference to the accompanying drawings.

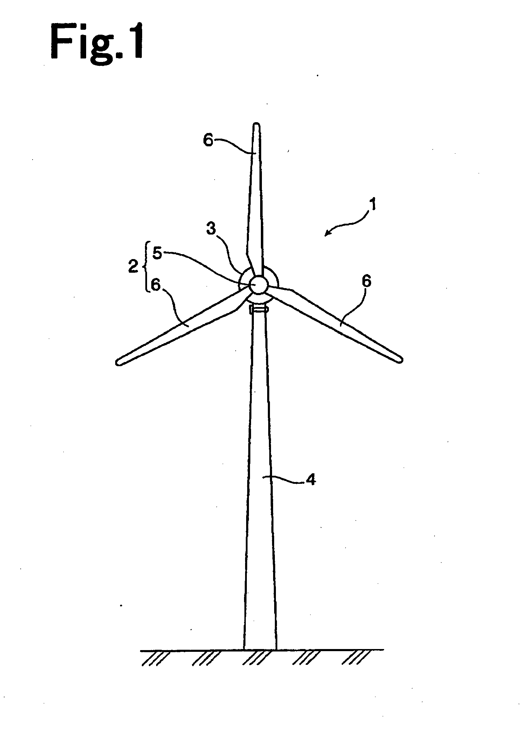

FIG. 1 illustrates an example of a wind turbine generator 1, to which the turning structure of the present invention is applied. The wind turbine generator 1 includes a horizontal-axis wind turbine 2, a nacelle 3 that houses an electrical generator to be driven by the horizontal-axis wind turbine 2, and a tower 4 that supports the nacelle 3 so as to allow yawing. The horizontal-axis wind turbine 2 is rotatably held by the tower 4 at a predetermined altitude from the ground, and is configured to rotate by wind power energy so that the electrical generator housed in the nacelle 3 is rotationally driven. The electrical generator converts rotational energy generated by the horizontal-axis wind turbine 2 into electric energy, and transmits the electric energy to a ground facility, such as a transformer, through a power transmission line housed in the tower 4.

The horizontal-axis wind turbine 2 includes a hub 5 rotatably supported on the nacelle 3, and three blades 6 radially extending from the hub 5. Between each blade 6 and the hub 5, a turning structure 7 is provided so as to change a pitch angle of the blade 6 relative to the hub 5. Note that, in the example illustrated in FIG. 1, three blades 6 are provided, but the number of blades is not limited to three as long as the blades are rotatable by the wind power energy.

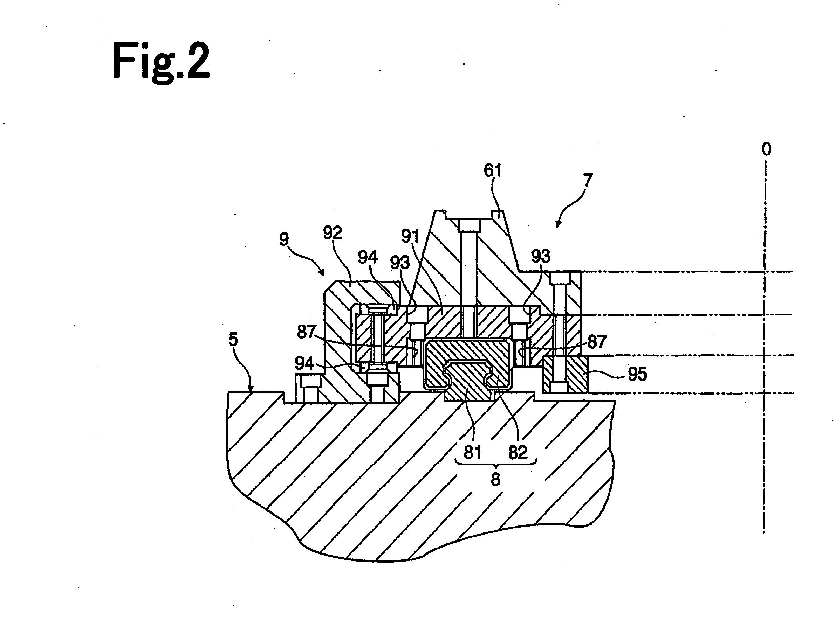

As illustrated in FIG. 2, the turning structure 7 includes a rolling bearing mechanism 8, which is fixed to the hub 5 and is configured to turn and guide the blade 6, and a slide bearing mechanism 9, which is fixed to the hub 5 together with the rolling bearing mechanism 8 and forms a slide bearing. Note that, the chain line O in FIG. 2 indicates a turning center of the turning structure 7.

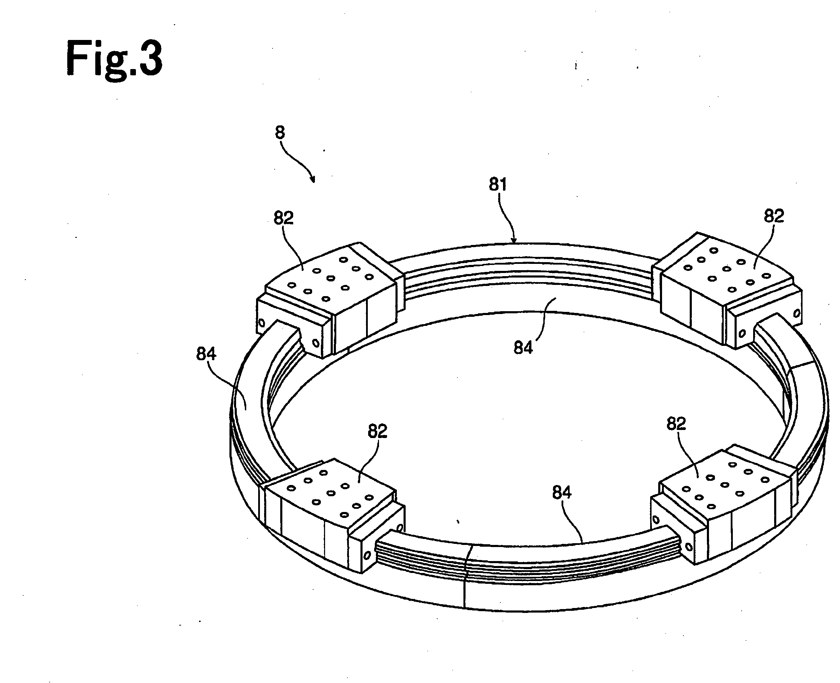

FIG. 3 is a perspective view illustrating the rolling bearing mechanism 8. The rolling bearing mechanism 8 includes a stationary ring 81, which is formed into an endless annular shape and is arranged on the hub 5, and a plurality of slide blocks 82 mounted to the stationary ring 81 via a large number of balls.

The stationary ring 81 is formed by continuously arranging a plurality of arc-like track rails 84, and the track rails 84 are each formed into an arc shape at a predetermined curvature. In the example illustrated in FIG. 3, three track rails 84 are continuously arranged to form the stationary ring 81.

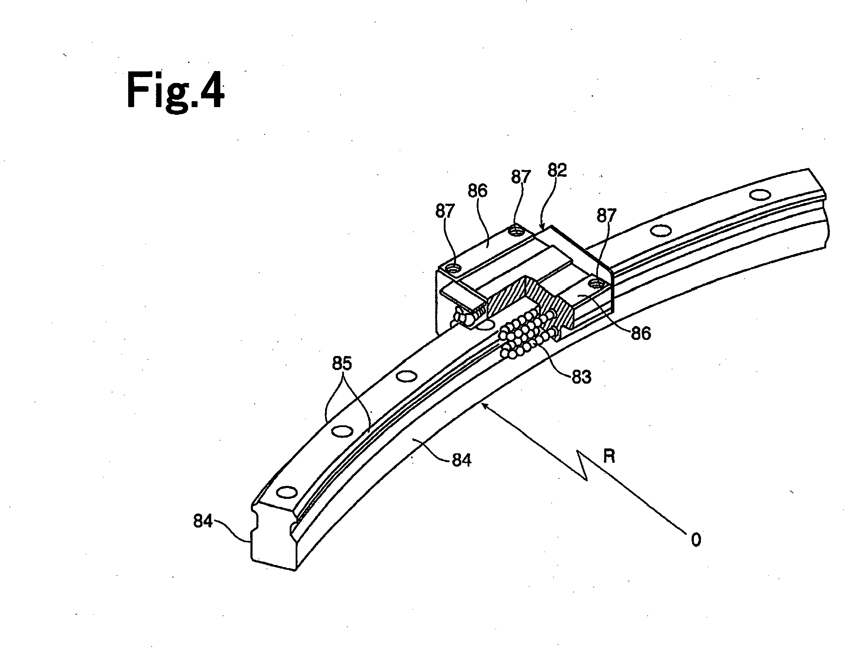

FIG. 4 is a perspective view illustrating details of each track rail 84 formed into an arc shape, and the slide block 82 mounted to the track rail 84. The track rail 84 is formed into an arc shape so as to have a predetermined curvature radius R relative to the turning center O of the turning structure 7, and is formed into a substantially rectangular shape in cross section perpendicular to a longitudinal direction thereof. Two ball raceway grooves 85 are formed in each of an inner peripheral side surface and an outer peripheral side surface of the track rail 84 along the longitudinal direction thereof, and accordingly four ball raceway grooves 85 are formed in total.

On the other hand, the slide block 82 is formed into a substantially channel shape in cross section so as to straddle the stationary ring 81, and includes flange sections 86 formed in outer side surfaces of the slide block 82, to which a turning table 91 of the slide bearing mechanism 9 to be described later is fixed. In the flange sections 86, there are formed bolt holes 87 for thread engagement with fixing bolts.

Further, the slide block 82 is provided with an infinite circulation path for balls 83 that roll along the ball raceway grooves 85 of the track rail 84. The balls 83 circulate along the infinite circulation path, and thus the slide block 82 is continuously movable along the track rail 84. Further, as illustrated in FIG. 3, the ball raceway grooves 85 are continuously provided in the two track rails 84 which are held in contact with each other at end portions thereof, and hence the slide block 82 is movable between one track rail 84 and another track rail 84. Thus, the slide block 82 can freely move around the stationary ring 81 formed of the plurality of track rails 84.

Further, the slide block 82 is mounted to the track rail 84 via rows of balls that roll along the four ball raceway grooves 85 formed in the track rail 84, and a direction of contact of each row of balls with the track rail 84 and the slide block 82 is inclined at 45° from the surface of the track rail 84 fixed to the hub 5. Therefore, the slide block 82 is movable along the track rail 84 while carrying a radial load applied in a direction perpendicular to an axial direction of the turning structure 7.

Note that, in the combination of the track rail 84 and the slide block 82 illustrated in FIG. 4, the balls 83 are used as rolling elements, but a large number of rollers may be used instead of the balls 83. In a case where the rollers are used, an allowable load to be carried by the slide block can be set to a large value.

On the other hand, as illustrated in FIG. 2, the slide bearing mechanism 9 includes the turning table 91, to which a coupling plate 61 of the blade is fixed, and a bearing member 92 that forms the slide bearing together with the turning table 91.

The turning table 91 is formed into an annular shape that is continuous in a circumferential direction thereof about the turning center O, that is, the turning table 91 is provided concentrically with the stationary ring 81 as a component of the rolling bearing mechanism 8. Further, in the turning table 91, bolt holes 93 that communicate and connect to the bolt holes 87 of the slide block 82 are formed along the circumferential direction at a predetermined pitch. That is, the turning table 91 is fixed to the slide block 82 with fixing bolts.

Further, at an outer peripheral side end portion of the turning table 91, on an upper surface of the turning table 91 in a coupling direction of the blade and on a lower surface of the turning table 91 in a direction opposite thereto, sliding plates 94 having self-lubricating properties are arranged for smooth turning motion of the turning table 91. For example, woven fabrics made of composite materials are used for the sliding plates 94. The sliding plates 94 are each continuously arranged in the circumferential direction so that the outer peripheral side end portion of the turning table 91 is sandwiched from the upper surface side and the lower surface side. Note that, the sliding plate 94 may be formed into an annular shape that is continuous in the circumferential direction. In this embodiment, the sliding plates 94 are fixed on the turning table 91 side, but may alternatively be fixed on the bearing member 92 side.

Further, a rack gear 95 formed into a ring shape is fixed below an inner peripheral end portion of the turning table 91, and a pinion gear (not shown) meshes with the rack gear 95. The pinion gear is arbitrarily rotatable by a motor mounted to the hub 5. When the motor rotates the pinion gear, the turning table 91 turns relative to the hub 5, and accordingly the pitch angle of the blade fixed to the coupling plate 61 situated on the turning table 91 can be changed arbitrarily.

On the other hand, the bearing member 92 is fixed to the hub 5 with fixing bolts, and is formed into a C-shape in cross section so as to sandwich the sliding plates 94 arranged on the upper surface and the lower surface of the turning table 91. That is, the bearing member 92 is fitted without a gap to the outer peripheral side end portion of the turning table 91 via the sliding plates 94, and forms the slide bearing between the sliding plates 94. Such a bearing member 92 is arranged on the hub 5 concentrically with the stationary ring 81 of the rolling bearing mechanism 8 and arranged at regular intervals in the circumferential direction.

In the turning structure 7 configured as described above, three or more slide blocks 82 are mounted to the stationary ring 81 (in FIG. 3, four), and those slide blocks 82 are fixed to the single turning table 91. Therefore, in the turning table 91, only the turning motion around the turning center O of the turning structure 7 is allowed.

When the pinion gear meshing with the rack gear 95 of the turning table 91 is rotated by the motor, the turning table 91 performs the turning motion in accordance with the rotation amount of the motor while being guided by the rolling bearing mechanism 8. At this time, the bearing member 92 is configured so as to sandwich the outer peripheral side end portion of the turning table 91, and hence, even if the turning center O is shifted slightly, the turning motion of the turning table 91 is not hindered by the bearing member 92.

Further, when the turning table 91 performs the turning motion, in the rolling bearing mechanism 8, the balls 83 between the stationary ring 81 and the slide block 82 carry the radial load applied in the direction perpendicular to the axial direction of the turning structure 7. Meanwhile, in the slide bearing mechanism 9, the slide bearing is formed between the sliding plates 94 of the turning table 91 and the bearing member 92, and hence the slide bearing carries the axial load and the moment load applied in the axial direction of the turning structure 7.

According to the configuration described above, even in a situation in which the axial load and the moment load applied to the turning structure for the blade 6 are extremely larger as compared to the radial load, the slide bearing mechanism 9 reliably carries the axial load and the moment load, and thus there is no need to increase the number of rolling elements or the diameter of the rolling elements in the rolling bearing mechanism 8. Therefore, unnecessary cost increase that may be caused by the excessive carrying capacity does not occur, and accordingly the turning structure is producible at low cost.

Note that, in the embodiment described above, the bearing member 92 is configured so as to sandwich the outer peripheral side end portion of the turning table 91, but the bearing member 92 may alternatively be configured so as to sandwich an innerperipheral side end portion of the turning table 91. However, when the bearing member 92 is configured so as to sandwich the outer peripheral side end portion of the turning table 91, the turning diameter of the slide bearing formed by the slide bearing mechanism 9 increases, and hence the axial load and the moment load applied in the axial direction of the turning structure 7 can be carried more reliably.

Further, in the embodiment described above, the sliding plates 94 are each continuously provided in the circumferential direction on the upper surface and the lower surface of the turning table 91, but each of the sliding plates 94 may be intermittently provided along the circumferential direction as long as the sliding plates 94 form the slide bearing together with the bearing member 92.

Further, in the embodiment described above, the turning table 91 and the bearing member 92 are each formed of a single member, but may be formed by continuously arranging a plurality of arc-like members.

## Claims

1. A turning structure, comprising:
a rolling bearing mechanism (8) comprising:
a stationary ring (81), which is formed of a plurality of arc-like track rails (84) each having a predetermined curvature, and is formed into an endless annular shape; and
a plurality of slide blocks (82), which are mounted to the stationary ring (81) via a large number of rolling elements (83), and are freely movable along the stationary ring (81); and
a slide bearing mechanism (9) comprising:
a turning table (91), which is fixed to the plurality of slide blocks (82) of the rolling bearing mechanism (8), and is formed into an annular shape, the turning table (91) being configured to support an object to be turned; and
a bearing member (92), which is formed into a substantially C-shape in cross section so as to sandwich the turning table (91) from an axial direction of it, and forms a slide bearing together with the turning table (91).

2. The turning structure according to claim 1, wherein any one of the turning table (91) and the bearing member (92) that form the slide bearing mechanism (9) comprises a sliding plate fixed thereto, the sliding plate having self-lubricating properties.

3. The horizontal-axis wind turbine (2), comprising:
a hub (5) serving as a rotation center; and
a plurality of blades (6) radially coupled to the hub,
wherein a structure of the coupling of each of the plurality of blades (6) to the hub (5) comprises the turning structure according to claim 1 or 2.

## Patentansprüche

1. Drehstruktur, welche
einen Wälzlager-Mechanismus (8) aufweist, welcher folgendes aufweist:
einen stationären Ring (81), welcher von mehreren bogenartigen Laufschienen (84) gebildet wird, von denen jede eine vorgegebene Krümmung aufweist und in einer endlosen ringförmigen Gestalt ausgebildet ist; und
mehrere Gleitblöcke (82), welche über eine große Anzahl von Wälzelementen (83) am stationären Ring (81) montiert sind und frei entlang des stationären Rings (81) beweglich sind; und
ein Gleitlager-Mechanismus (9), der folgendes aufweist:
einen Drehtisch (91), welcher an den mehreren Gleitblöcken (82) des Wälzlager-Mechanismus (8) befestigt ist und in einer ringförmigen Gestalt ausgebildet ist, wobei der Drehtisch (91) ausgelegt ist, um einen zu drehenden Gegenstand zu tragen; und
ein Lagerteil (92), welches in einer im Wesentlichen im Querschnitt C-förmigen Gestalt ausgebildet ist, um so den Drehtisch (91) aus einer axialen Richtung denselben dazwischen zu legen und zusammen mit dem Drehtisch (91) ein Gleitlager bildet.

2. Drehstruktur nach Anspruch 1, wobei entweder der Drehtisch (91) und/oder das Lagerteil (92), welche den Gleitlager-Mechanismus (9) bilden, eine daran befestigte Gleitplatte aufweist, wobei die Gleitplatte selbstschmierende Eigenschaften besitzt.

3. Windkraftturbine (2) mit horizontaler Achse, welche folgendes aufweist:
eine Nabe (5), welche als Drehmittelpunkt dient; und
mehrere Rotorblätter (6), welche radial an die Nabe gekoppelt sind, wobei eine Struktur zur Kopplung von jedem der mehreren Rotorblätter (6) an die Nabe (5) die Drehstruktur nach Anspruch 1 oder 2 umfasst.

## Revendications

1. Une structure tournante pourvue
d'un mécanisme à roulement à billes (8) comprenant
une bague fixe (81) en forme de bague sans fin composée d'une pluralité de rails de voie en forme d'arcs (84) ayant un rayon de courbure prédéterminé ; et
une pluralité de blocs coulissants (82) qui sont incorporés dans la bague fixe (81) par le biais d'un grand nombre de rouleaux (83), et qui sont mobiles le long de la bague fixe (81) ; et
d'un mécanisme à palier lisse (9) comprenant
une table tournante (91) qui présente une forme de bague, fixée aux blocs coulissants (82) du mécanisme à roulement à billes (81) et qui est configurée de sorte à supporter un objet qui doit tourner ; et
un élément de roulement (92) qui présente une section sensiblement de la forme d'un C de sorte à fixer la table tournante (91) par rapport à la direction axiale, et constitue un palier lisse conjointement avec la table tournante (91).

2. La structure tournante selon la Revendication 1 dans laquelle l'une quelconque des tables tournantes (91) et l'un quelconque des éléments de roulement (92) qui forment le mécanisme à palier lisse (9) comprennent une plaque coulissante fixée à ce dernier, la plaque coulissante présentant en outre des propriétés autolubrifiantes.

3. Là turbine éolienne horizontale (2) pourvue :
d'un moyeu (5) servant de centre de rotation ; et
d'une pluralité de pales (6) couplées de manière radiale au moyeu,
dans laquelle la structure permettant le couplage de chacune des pales (6) au moyeu (5) comprend la structure tournante selon la Revendication 1 ou 2.
